# EUROPÄISCHE PATENTSCHRIFT

(11) **EP 1 073 796 B1**
(45) Veröffentlichungstag und Bekanntmachung des Hinweises auf die Patenterteilung: **17.07.2002**
(21) Anmeldenummer: 99904753.3
(22) Anmeldetag: 08.01.1999
(51) Int. Cl.: D21H 27/20, D21H 27/40

(54) **MEHRLAGIGE PAPIER-PRÄGETAPETE MIT GLATTER RÜCKSEITE, SOWIE VERFAHREN ZU DEREN HERSTELLUNG**
MULTI-LAYER EMBOSSED WALLPAPER WITH A SMOOTH REVERSE SIDE AND METHOD FOR PRODUCING THE SAME
PAPIER PEINT GAUFRE MULTICOUCHE A ENVERS LISSE, ET SON PROCEDE DE PRODUCTION

(30) Priorität: 13.01.1998 DE 19800797
(43) Veröffentlichungstag der Anmeldung: 07.02.2001
(73) Patentinhaber: Erfurt & Sohn KG, 42399 Wuppertal (DE)
(72) Erfinder: MICKAN, Karl, D-51643 Gummersbach (DE)
(74) Vertreter: Patentanwälte Lippert, Stachow, Schmidt & Partner
(86) Internationale Anmeldenummer: EP9900063
(87) Internationale Veröffentlichungsnummer: WO9936624

(56) Entgegenhaltungen:
- EP-A- 0 034 791
- DE-A- 1 635 595
- GB-A- 631 475

## Beschreibung

Die Erfindung betrifft eine in einer Produktionslinie hergestellte geprägte Papiertapete mit ebener Rückseite, die die Nachteile der bisher auf dem Markt befindlichen dreidimensionalen Papiertapeten weitestgehend ausschaltet.

Die Erfindung betrifft auch ein Verfahren zum Herstellen dieser mehrlagigen Tapete und eine Vorrichtung zur Durchführung des Verfahrens.

Die bisher auf dem Markt befindlichen dreidimensionalen Papiertapeten werden entweder als sogenannte Simplextapeten in der Form hergestellt, als man eine bedruckte oder auch unbedruckte Papierbahn, die entweder aus einer einzigen homogenen Schicht wie zum Beispiel aus einem holzhaltigen oder holzfreien Material bestehen kann, oder die schon als Basismaterial von der Papierfabrik als Zweischichtmaterial (Duplexpapier))angeliefert wird, im trockenen Zustand einem Prägewalzensatz zuführt, der auf Grund seines tief gravierten oder tief geätzten Musters die Papierbahn unter Druck dreidimensional verformt.

Diese so hergestellten Prägetapeten haben den großen Nachteil, daß sie keine tiefe Prägung zulassen, da die Verformung im trocknen Zustand erfolgt und bei zu starker Tiefenbelastung das verformte Papier aufbricht und seine innere Struktur stark beschädigt wird.
Außerdem geht das dreidimensionale Aussehen nach dem Tapezieren und dem anschließenden Auftrocknen an der Wand bis zu 80% verloren. Das im Tapetenkleister befindliche Wasser bringt die Papierfasern zum Quellen, während des Trocknungsprozesses nach dem Tapezieren verflachen die Ausprägungen dann aber sehr stark, da der Quellvorgang jetzt mit negativem Vorzeichen abläuft, d.h. es findet ein Schrumpfen statt, das dann zu dieser extremen Verflachung der Prägestruktur führt. Auch ist bei der Anbringung der eingeweichten Papierbahn äußerst vorsichtig vorzugehen, da diese sehr stark druckempfindlich ist und ein zu hartes Anbürsten oder Anrollen die durchweichten Prägestrukturen abflachen läßt .

Eine nicht unwesentliche Verbesserung bringen hingegen schon die sogenannten duplierten Prägetapeten. Hier werden zwei Papierbahnen mittels eines stark wasserhaltigen Klebers miteinander kaschiert und dann durch den Prägewalzensatz verformt.. Das im Kaschierklebstoff enthaltene Wasser hat die Aufgabe, die beiden Papierbahnen gut zu durchfeuchten und somit plastisch verformbar und dadurch unempfindlich gegen eine tiefe Verprägung zu machen. Dadurch ist es auch möglich, wesentlich tiefere Verformungen als bei einer trocken geprägten Tapete herzustellen. Die kaschierten Papierbahnen werden dem Prägewalzensatz zugeführt, naß verformt und dann getrocknet. Mittels einer nachgeschalteten Roll- und Verpackungsmaschine wird die fertig getrocknete dreidimensionale Tapetenbahn auf Verkaufslänge geschnitten und verpackt.

Da bei der oben beschriebenen duplierten Prägetapete der Kaschierklebstoff im noch nassen Zustand mit in die dreidimensionale Form gepreßt wurde und in dieser auch auftrocknet, erhält man eine bessere Prägestabilität, d.h. nach der Tapezierung und der anschließenden Trocknung an der Wand ist die Verflachung der ausgeprägten Figuren wesentlich geringer als bei trocken hergestellten Prägetapeten. Je nach Muster liegt hier die Abflachung zwischen 30 und 50%.

Es ist auch eine Tapetenart (EP-A-0 524 564)beschrieben worden (noch nicht auf dem Markt), bei der eine Dreifachkaschierung vorgeschlagen wird, d.h. es werden vor der eigentlichen Verformung drei Papierbahnen miteinander verklebt, im nassen Zustand verformt, getrocknet, auf Verkaufslänge geschnitten, gerollt und dann verpackt. Der Kleber soll ganzflächig zwischen den Bahnen eins und zwei und ganzflächig zwischen den Bahnen zwei und drei aufgetragen werden, um die mittlere Bahn - also Bahn zwei - als Stützschicht auszubauen. Das kann aber zur Folge haben, daß die beiden ganzflächig aufgetragenen Kleberschichten die Luftdurchlässigkeit und somit die Atmungsaktivität nachteilig beeinflussen.

Bei der Tapezierung einer solcher Art hergestellten Tapete, ist der Kleisterverbrauch jedoch nach wie vor sehr hoch, da es sich um eine voll durchgeprägte Ware handelt und alle sich auf der Rückseite befindlichen Hohlstellen mit Kleister ausgefüllt werden, der zur Haftung der Papierbahn zur Wand dort gar nicht nötig ist. Allerdings kann eine so hergestellte Tapete eine weitere Verbesserung der Prägestabilität gegenüber der trocken geprägten Tapeten und der duplierten Prägetapeten bringen, verliert in ihrer Dreidimensionalität aber immer noch an Prägehöhe.

Es ist weiter vorgeschlagen worden, Prägetapeten aus Kunststoff herzustellen und die Prägungen mit Schaum auszufüllen. Derartige Prägetapeten sind jedoch nicht atmungsaktiv, darüberhinaus ist die Entsorgung der Tapete am Ende ihrer Gebrauchzeit bei einer Neutapezierung aufwendig.

Weiterhin ist vorgeschlagen worden (DE-A-1 635 595) und (DE-C-216 268), zunächst die Prägungen in einer ersten Schicht einzubringen und diese Schicht dann mit einer glatten Trägerschicht, ein holzartiges nicht dehnungsfähiges Papier (Makulaturpapier) zu kaschieren. Hier ist der Nachteil, daß beim Trocknen eine unterschiedliche Längenausdehnung zwischen Prägeschicht und Trägerschicht, die beim Aufrollen leicht zu einem Brechen der Prägetapete führen oder aber, beim Aufbringen von Kleister zur Wandbefestigung durch die inneren Spannungen zwischen den beiden Schichten von der Wand teilweise sich ablösen oder aber, daß die Prägeschicht sich von der Trägerschicht löst. Weiter hat sich jedoch gezeigt, daß der so hergestellte Papierverbund eine sehr große Steifigkeit erhält, sodaß das Transportieren dieser Materialbahn mit glatter Rückseite durch die Herstellungs-und Konfektionierungsanlagen nicht ohne Beschädigung des Verbundes möglich ist. Auch das Tapezieren eines solchen Verbundes ist nicht einwandfrei möglich, da das glatte nicht dehnungsfähige Unterpapier einer solchen Prägetapete den Verbund so versteift, daß ein Tapeziern um Kanten und Ecken, sei es bei Biegungen nach innen oder auch nach außen, nicht möglich ist. Die Biegesteifigkeit des Verbundes auch noch im eingekleisterten Zustand ist so stark, daß die Prägetapete nicht problemlos verarbeitet werden kann. Beim Versuch der Umbiegung des sehr biegesteifen Materiales kommt es zu so starken Beanspruchungen der Klebezonen zwischen geprägter Oberbahn und glatter in sich starrer Unterbahn, daß sich einerseits die Klebeverbindungen zwischen Prägeschicht und Unterpapier lösen und andererseits das steife Tapetenmaterial um tapezierte Ecken wieder löst, da die Rückstellkräfte der tapete um ein Vielfaches höher sind als die Anfangsklebkraft verwendeter Tapetenkleister.

Aus der EP 0 034 791 A 1 ist eine dreidimmensionale Strukturtapete bekannt geworden. Beim ersten Ausführungsbeispiel ist eine Prägeschicht vorgesehen sowie eine glatte Trägerschicht. Zwischen Präge- und Trägerschicht ist eine durchgehende Leimschicht vorgesehen. Bei einem zweiten Ausführungsbeispiel ist eine verformte Träger- als auch Prägeschicht vorgesehen. Wiederum ist jedoch zwischen den beiden Schichten insgesamt eine Leimschicht angeordnet, die Trägerschicht ist aber auf der Unterseite durch ihre Verformung nicht mehr glatt.

Das gleiche gilt für das dritte Ausführungsbeispiel. Hier sind beide Schichten verformt. Es ist jedoch nur bereichsweise eine Leimschicht angeordnet. Diese Leimschicht liegt verleimt an den einander zugewandten Spitzen der Ausprägungen beider Schichten.

Aus der Druckschrift ist weiter entnehmbar, daß die Prägeschicht aus Krepp-Papier aufgebaut sein kann, um der Tapete ein textilartiges Aussehen zu geben.

Aufgabe der vorliegenden Erfindung ist es, eine Tapete gemäß dem Oberbegriff des Anspruches 1 so zu gestalten, daß sie atmungsaktiv und dimensionsstabil ist, darüberhinaus soll sie preisgünstig herzustellen sein, schließlich soll auch beim Anbringen der Tapete der Kleisterverbrauch gering sein, wobei auch bei einem Anbringen der Tapete die Formstabilität und die Atmungsaktivität erhalten bleibt.

Dies geschieht erfindungsgemäß und zwar nach den Ansprüchen 1 und 7, dadurch, daß eine aus einem wenigstens zweilagig kaschierten Papierverbund, also einem verstärkten Material bestehende Bahn im noch feuchten Zustand oder aus einem Duplextapetenrohpapier bestehenden Bahn geprägt wird und direkt nach ihrem Abtrocknen (falls kaschiert) auf eine Trägerschicht aus einem dehnbaren, ebenen zumindest an ihrer Unterseite glatten Material aufgebracht wird. Die Prägungen in der Prägeschicht bleiben bei der Herstellung und insbesondere bei der Abtrocknung auf der Wand nach der Tapezierung weitestgehend erhalten. Durch den Klebstoffverbrauch, der nur an bestimmten Stellen vorgesehen ist, bleibt die Atmungsaktivität durch die ebene Trägerschicht und die Prägeschicht voll erhalten. Die glatte bzw. ebene dehnbare Unterseite erlaubt beim Tapezieren weiterhin ein sicheres Aufbringen auf die Wand. Die Prägeschicht kann auch aus Simplexpapier aufgebaut sein, die durch Kunststofffäden bzw. Kunststofffasern verstärkt ist, wobei bei einem Heißprägen eine Verschweißung zwischen den Fäden und dem Simplexpapier stattfindet. Die Prägeschicht ist auch mit den Kunststofffäden atmungsaktiv. Die Gestaltung. der der Trägerschicht gestattet es, etwaige Schrumpfungen oder Dehnungen in der Prägeschicht oder in der Trägerschicht bei der Herstellung oder bei der Tapezierung auszugleichen, so daß eine sichere Verarbeitung gegeben ist, ohne befürchten zu müssen, daß die Prägetapete selber bei einem Aufrollen bricht oder die Prägung beim Tapezieren auf eine Wand verschwindet oder erheblich in der Höhe verliert, da zwischen den Leim- oder Klebstoffbefestigungsstellen zwischen Trägerschicht und Prägeschicht die Trägerschicht weiter dehnbar ist, so daß die Trägerschicht an den Leimstellen scharnierartig praktisch nach allen Seiten der Trägerschicht dehnbar gelagert ist. Zwischen den einzelnen Klebeverbindungen zwischen geprägter Oberbahn und ebener Trägerschicht ist also eine örtlich begrenzte Beweglichkeit durch die Mikrobiegbarkeit und Mikrodehnbarkeit der Trägerschicht gegeben. Durch diese Maßnahme ist das Aufrollen des Verbundes aus geprägter Oberbahn (Prägeschicht) und ebener Trägerschicht bzw. das Tapezieren um Ecken besonders leicht möglich, ohne daß befürchtet werden muß, daß Trägerschicht und Prägeschicht durch Überbeanspruchung delaminieren.

Bei einem ersten Ausführungsbeispiel ist die Trägerschicht aus einem dehnbaren Vliesstoff aufgebaut. Es hat sich hier gezeigt, daß hierdurch eine sichere und wohlfeile Prägetapete geschaffen wird. Bei einem anderen Ausführungsbeispiel ist die Trägerschicht aus einem dehnbaren ebenen Papier aufgebaut, beispielsweise einem Papier, das vor der Verklebung mit der Prägeschicht einer Mikrogauffrage unterworfen wird oder ist , also Mikroprägungen aufweist, um eine Dehnbarkeit bzw. Stauchbarkeit der Trägerschicht zu erhalten; hier ergibt sich in vollem Maße die Atmungsaktivität der Papier-Prägetapeten, darüber hinaus eine Verbilligung in der Herstellung, und vor allem eine sicher und leicht zu handhabende Tapete, die sowohl bei ihrer Herstellung als auch beim späteren Tapezieren ohne Beschädigungen einsetzbar ist.

Bei einem besonderen Ausführungsbeispiel der Erfindung ist die Trägerschicht aus einem Krepp-Papier aufgebaut. Dieses Krepp-Papier, das eine relativ glatte Unterseite (mit Höhenunterschieden in ihrer Oberfläche von etwa 30 µm) aufweist, erlaubt ein sicheres Tapezieren, selbst beim Knicken, Auf- oder Abrollen. Die Mikro-Dehnbarkeit bzw. Stauchbarkeit des Trägermaterials verhindert zu starke Belastungen an den Verklebungspunkten zwischen Prägeschicht und ebener Unterschicht, so daß eine Beschädigung der Tapete bei der Herstellung oder beim Gebrauch nicht möglich ist, trotzdem ist eine einwandfreie Verarbeitung möglich, hierbei kann das Krepp-Papier bei einem besonderen Ausführungsbeispiel auch nach zwei unterschiedlichen Richtungen gekreppt sein.

Günstigerweise ist das Krepp-Papier naßfest abgeleimt, um so eine sichere Haltbarkeit der Trägerschicht an der Prägeschicht nach dem Einkleistern beim Tapezieren zu erreichen.

Empfehlenswerterweise ist der Klebstoff zwischen Prägeschicht und Trägerschicht wenigstens schwer wasserlöslich. Durch diese Maßnahme bleibt die Verbindung zwischen Prägeschicht und Trägerschicht sicher bei der Einweichung durch Auftragen von Kleister an der Trägerschicht oder beim Einweichen der Prägeschicht zum Entfernen der Tapete von einer Wand erhalten.

Es ist ein Verfahren bekannt geworden (DE-A-1 635 595), bei dem hinter einer Prägevorrichtung eine Einrichtung vorgesehen ist, die Klebemittel auf die eine Seite der Prägekartonbahn aufbringt und danach ein herkömmliches Kaschierpapier mit Hilfe von einer oder mehrerer Umlenk-und Führungsrollen angedrückt werden soll. Bei einem solchen Verfahren ist aber von entscheidendem Nachteil, daß durch die Führung der Materialbahn über bekannte Umlenk-und Andrückvorrichtungen beim Kaschieren mit dem glatten Kaschierpapier keine stabile Verklebung erfolgt, da die bekannten Umlenkwalzen der Materialbahn dauernd wechselnde Relativbewegungen abverlangen. Außerdem verhindert das in sich biegesteife und starre Kaschierpapier die Erreichung einer stabilen Klebeverbindung zwischen Prägekartonbahn und glattem Kaschierpapier.

Die Erfindung betrifft auch ein Verfahren zum Herstellen einer mehrlagigen Papiertapete gemäß Anspruch 7, bei dem zunächst in eine Papierschicht die Prägungen eingebracht werden, gegebenenfalls eine Trocknung durchgeführt wird, dann auf der Unterseite der Prägeschicht der Klebstoff aufgetragen wird, worauf dann die Trägerschicht auf der Prägeschicht befestigt und die Tapete fertiggetrocknet wird.

Bei einem solchen Verfahren ist von Nachteil, daß die Prägeschicht durch die Feuchtigkeit der Leimstellen nicht formstabil ist. Die Trägerschicht und Prägeschicht können sich bei der Herstellung leicht in ihrer Länge unterschiedlich ausdehnen bzw. sich verschieben. Bei der Befestigung der beiden Schichten ist relativ viel Leim erforderlich, da die gesamte Prägeschicht auf ihrer einen Seite mit Leim ausgefüllt wird, schließlich können die Prägungen leicht flachgedrückt werden. Beim Knicken oder Zusammenrollen reißen die Verbindungsstellen zwischen den beiden Schichten leicht auseinander.

Aufgabe der Erfindung ist es daher, auch ein Verfahren der hervorgehend genannten Art so zu gestalten, daß die Prägungen bei der Herstellung erhalten bleiben, das Tapetenmaterial beim Durchlaufen des Herstellungsprozesses weiterhin sehr biegsam bleibt und daß eine kostengünstige Herstellung insgesamt gegeben ist und auch nachträglich die Prägungen nicht in ihrer Höhe verkleinert werden.

Dies geschieht erfindungsgemäß und zwar nach dem Anspruch 7, dadurch, daß der Klebstoff zur Verbindung der Prägeschicht mit der Trägerschicht nur an den herausragenden Prägestellen an der Unterseite der zweilagigen Prägeschicht aufgetragen wird und daß eine dehnbare ebene Materialbahn an den Klebestellen als Trägerschicht befestigt wird. Dadurch, daß der Klebstoff nur an den rückseitig unteren Prägestellen, also an bestimmten wenigen Stellen aufgetragen wird, ergibt sich bei der Herstellung, daß die Prägungen leicht trocken bleiben, so daß eine Formstabilität beim Auftragen des Leimes und der anschließenden Befestigung der Trägerschicht gegeben ist, darüber hinaus bleibt die Gesamttapete atmungsaktiv, schließlich erreicht man durch diese Maßnahme auch, daß die fertige Tapete sicher und leicht zusammengerollt wird, ohne daß ein Aufspringen an den Befestigungsstellen zwischen den beiden Schichten, nämlich Prägeschicht und Trägerschicht erfolgt, da die dehnbare Trägerschicht etwaige Längenveränderungen aufnimmt, sei es in Art einer geringen Dehnung wie Mikrodehnung oder einer Längenverkürzung als Mikroschrumpfung. Der sich ergebende leicht biegbare Verbund, der alle Materialbewegungen über Führungswalzen mit normalerweise kleinen Biegeradien durch die Herstellungs- und Konfektionierungsanlagen ohne Schaden erlaubt sowie die Eingrenzung der Verklebung auf die unten liegenden Stellen der Prägeschicht führt zu einer hohen Atmungsaktivität des Verbundes im fertigen Zustand.

Bei einem besonders vorteilhaften Verfahren findet beim fortlaufenden Zusammenführen von Trägerschicht und Prägeschicht nach dem Klebstoffauftrag in einem Abschnitt eine erhöhte Geschwindigkeit der Antrocknung bzw. Verbindung statt, die die beiden Schichten so aneinander befestigt, daß sie bis zur Endtrocknung also Endverklebung sicher aneinander haften. Diese Maßnahme gestattet ein Verfahren so zu gestalten, daß nach Zusammenbringen der beiden Schichten sich diese an deren Verklebungspunkten innig verbinden können und so diese beim weiteren Transport durch die Herstellungsanlage bis zum Erreichen einer Mindesthaftfestigkeit des Klebstoffes keine Relativbewegungen oder Lösungen erfahren. Bei einem besonderen Ausführungsbeispiel der Erfindung erfolgt die erhöhte Geschwindigkeit der Antrocknung bzw. Verbindung durch Bestrahlen, insbesondere Wärmebestrahlung.

Hierdurch kann genau dosiert werden, in Abhängigkeit von der Geschwindigkeit, mit der die beiden Schichten durchlaufen. Hierbei kann die Bestrahlung über Mikrowellen (Infrarot) oder andere Strahlung erfolgen.

Bei einem anderen Ausführungsbeispiel der Erfindung erfolgt die erhöhte Geschwindigkeit der Antrocknung durch thermische Übertragung, insbesondere Wärmeübertragung. Die zu trocknenden beiden Schichten liegen auch einfach auf einem heizbaren Teil auf, daß durch die genaue Art der Wärmezugabe und dem Verhältnis der Feuchtigkeit wiederum ein Abbinden des Leimes oder des Klebstoffes gegeben ist. Hierbei könnte das Abbinden auch durch Verdunsten eines Lösungsmittels erfolgen.

Empfehlenswerterweise liegt wenigstens in der Phase der erhöhten Geschwindigkeit der Antrocknung bei der Bewegung der beiden Schichten die Prägeschicht mit ihren Klebe- bzw. Verbindungsstellen leicht mit Druck auf der Trägerschicht auf, um so eine eindeutige Verbindung zwischen den Prägungen und der Trägerschicht zu erhalten, so daß die Verbindungsstellen eine genaue Halterung gewährleisten.

Die Erfindung betrifft aber auch eine Vorrichtung zur Durchführung des Verfahrens, bei der die einzelnenn Schichten aneinander befestigbar sind, gemäß Anspruch 13. Um eine solche Vorrichtung noch wesentlich sicherer zu machen und die Herstellung der Tapeten zu vereinfachen, wird erfindungsgemäß an der Zusammenführungsstelle von Trägerschicht und Prägeschicht nach dem Klebstoffauftrag eine Trocknungsvorrichtung/ Laminiervorrichtung angeordnet. Durch diese Maßnahme können den einzelnen Schichten sowie dem Klebstoff die eventuell vorhandene Feuchtigkeit entzogen werden. Vorteilhafterweise ist die Verbindungsstelle als Umlenkungsstelle ausgebildet, die walzenartig gestaltet ist, hierbei ist die Walze derart heizbar, daß während der bereichsweisen Umlenkung der beiden Schichten eine Antrocknung stattfindet und die beiden Schichten aneinander haften bleiben. Vorteilhafterweise erfolgt bei der Phase der erhöhten Geschwindigkeit der Antrocknung bei wasserhaltigem Klebstoff die Beheizung der Trommel bzw. der Laminierstrecke bis um 200 ° Grad. Es hat sich nämlich gezeigt, daß diese Temperaturschicht sicher eine Antrocknung der beiden Schichten gewährleistet.

Bei der Verwendung von Klebestoffsystemen, die nicht wasser- oder lösemittelhaltig sind, ist die Laminierstrecke ebenfalls so gestaltet, daß bis zum Erreichen einer Mindesthaftfestigkeit der Verklebung die beiden Schichten sich nicht gegeneinander verschieben können.

Bei einem besonders vorteilhaften Ausführungsbeispiel der Vorrichtung ist die auf der Trägerschicht liegende, um die Umlenktrommel geführte Prägeschicht in ihrer Bewegungsrichtung unter Spannung gestellt und stützt sich mit ihren Klebestellen auf der Trägerschicht ab. Durch eine einfache Erhöhung der Spannung des Prägeblattes wird an der Umlenkstelle erreicht, daß diese sich mit ihren gegen die Walze gerichteten Prägungsspitzen auf der Trägerschicht abstützt, so daß dann sicher die Antrocknung erfolgen kann. Von Vorteil ist es weiterhin, daß bei der Vorrichtung die Umlenktrommel und/oder die Laminiereinrichtung beheizbar sind und daß bei Verwendung von wasserhaltigem Leim die Erwärmung bis auf 220 ° Grad Celsius erfolgt. Vorteilhafterweise ist die Trägerschicht zur Laminierstrecke so geführt, daß die ebene dehnbare Trägerschicht schon an dieser anliegt, während die Prägeschicht selber auf dieser Trägerschicht angeordnet wird.

Als Klebstoffe können sowohl wasserhaltige als auch lösemittelhaltige Systeme zum Einsatz kommen, schließlich auch Klebstoffe, die reaktiv mit Feuchtigkeit oder Zwei- oder Mehrkomponenten bildende Klebstoffe sind. Auch UV-härtende oder Heißschmelzkleber können zum Einsatz kommen, je nachdem, wie schwer die einzelnen Schichten sind und wie stark die Prägeschichten sind.

Vorteilhafterweise ist die Trägerschicht zur Laminierstrecke so geführt, daß die ebene dehnbare Trägerschicht schon an dieser anliegt, während die Prägeschicht selber auf dieser Trägerschicht angeordnet wird.

Als Klebstoffe können sowohl wasserhaltige/ lösemittelhaltige Systeme zum Einsatz kommen als auch Klebstoffe, die reaktiv mit Feuchtigkeit oder zwei oder mehrkomponentig, UV-härtend oder auch Heißschmelzkleber sind.

Im Ausführungsbeispiel erfolgt nach dem Einbringen der Prägungen in die mehrlagige Papierschicht eine Trocknung, dann an ihrer Unterseite eine Auftragung von Klebstoff an bestimmten Stellen, wobei an der Unterseite dann eine ebene dehn-/ schrumpfbare Materialbahn aufgebracht und schließlich die fertige Prägetapete endgetrocknet wird. Auf der Zeichnung ist der Erfindungsgegenstand in einem Ausführungsbeispiel dargestellt und zwar zeigen:
- Fig. 1: die Prägetapete mit Prägeschicht und Trägerschicht in auseinandergezogener Darstellung,
- Fig. 2: die vollständige Prägetapete,
- Fig. 3: eine schematische Darstellung einer Tapetenherstellung.

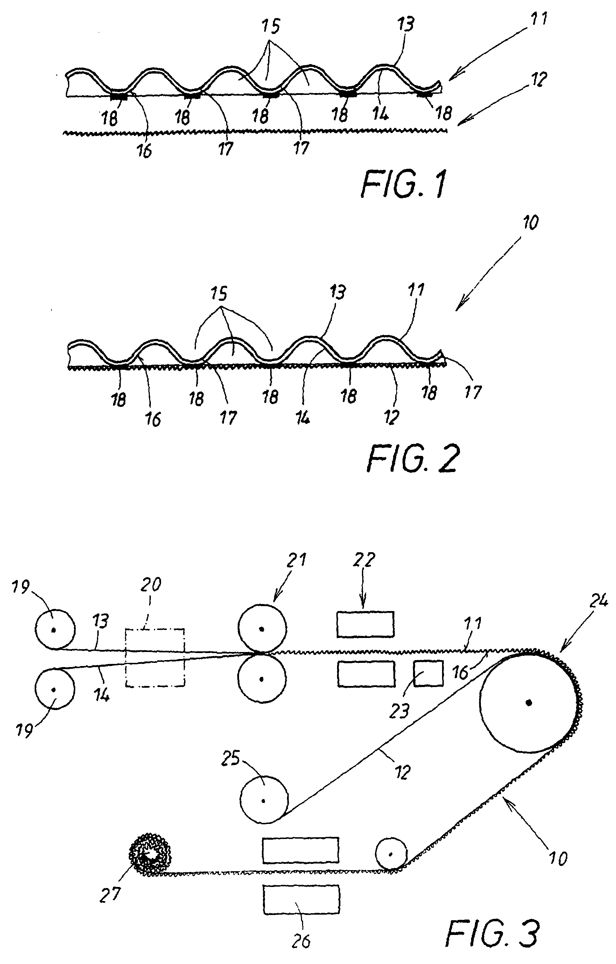

Die Prägeschicht selber ist aus sogenannten Duplex-Papier oder aus zwei Lagen Papier durch Laminierung hergestellt und besteht je aus einer Lage 13 und 14. Die Prägeschicht weist Prägungen 15 auf, die durch beide Lagen 13 und 14 hindurchgehen. Die beiden Lagen 13 und 14 bilden eine sogenannte duplierte Prägeschicht oder aber eine Prägeschicht aus Duplexpapier. In dem einen Fall erfolgt die Prägung mit vorheriger Kaschierung zweier einzelner Bahnen, im anderen Fall ohne Kaschierung, da das zweilagige Duplexpapier zum Einsatz kommt.
Auf der Unterseite 16 der Prägeschicht sind hervorstehende Prägeabschnitte 17 vorgesehen, an diesen Prägeabschnitten ist Klebstoff 18 aufgetragen. Die Verbindung zwischen Prägeschicht und Trägerschicht erfolgt nach dem Aufbringen des Klebstoffes, wie Fig. 2 zeigt.

Zur Herstellung der Prägetapete sei auf Fig. 3 verwiesen. Die beiden Lagen 13 und 14 für die Kaschierung werden von Vorratsrollen 19 abgewickelt. Wird ein Duplexpapier verwendet, so wird dieses nur von einer der beiden Vorratsrollen 19 abgewickelt. Werden zwei Einzellagen miteinander verbunden, so wird eine der beiden Bahnen einer Leimstation 20 zugeführt und mit der anderen Bahn zusammengefügt, dann über eine Prägestation, wie Prägewalze 21 mit Gegenwalze transportiert und in einer Trockenstation getrocknet. Anschließend wird auf der Unterseite 16 der Prägeschicht 11 über die Klebstoffstation 23 Klebstoff aufgetragen. Die Prägeschicht wird dann einer Verbindungsstation 24 zugeführt. Zugleich trifft dort von einer Vorratsrolle die Trägerschicht 12 ein, wobei die beiden Schichten 11 und 12 aneinander befestigt sind, hierbei liegt die Prägeschicht 11 fest auf der Trägerschicht 12 auf. Wichtig ist, daß die Trägerschicht als erstes über die zum Beispiel trommelartige Verbindungsstation 24 geführt wird und daß dort die Prägeschicht in ihrer Längsrichtung unter Zug steht, so daß sie sich federartig mit ihren Prägungen auf der Trägerschicht abstützt. Gegebenenfalls kann auch die Prägeschicht leicht auf die Trägerschicht gedrückt werden.

Bei Verwendung von wasser- bzw. lösemittelhaltigen Klebstoffen ist diese beheizbar, es sei über eine spezielle Wärmevorrichtung oder sei es über Mikrowelle oder hochfrequente Strahlung derart, daß die beiden Schichten 11 und 12 aneinander befestigt werden. Generell können eine Vielzahl von Klebstoffen verwendet werden. Das Verfahren ist also nicht nur beschränkt auf Klebstoffe, die durch Wasserentzug bzw. Lösemittelentzug ihre Klebkraft erreichen. Vielmehr können auch Reaktivklebstoffe, Heißklebstoffe und andere Arten von Klebstoffen zum Einsatz kommen. Wichtig ist hierbei nur, daß Prägeschicht und ebene mikrodehnbare Trägerschicht bis zum Erreichen einer Anfangshaftung keine Relativbewegungen durch Relativkräfte erfahren, was zu Delaminierungen führen und die Verklebungspunkte schwächen würde. Die Prägetapete wird dann weiter geführt, hierbei ist zu erkennen, daß die Prägeschicht 10 bereits sicher an der Trägerschicht 12 gehaltert ist und zwar durch die Antrocknungsphase in der Verbindungsstation 24. Die Verbindungsstation 24 muß aber nicht unbedingt eine Trommel sein, es kann sich auch um eine ebene Zone handeln, die relativbewegungslose Führung von Prägeschicht und Trägerschicht erreicht, solange die Verklebung noch nicht ausreichend stabilisiert ist. Schließlich wird die Prägetapete einer End- Trockenstation 26 zugeführt und auf der Walze 27 aufgewickelt oder direkt der Konfektionierungsanlage zugeführt zum Ablängen in Verkaufseinheiten und zur Verpackung.

Um die Ausmaße der Maschine zu begrenzen, kann die Prägeschicht oder die Prägetapete in einem sogenannten Duplexkanal getrocknet werden, so daß am Herausgang des Kanals die fertige trockene duplierte oder Prägetapete vorliegt.

Durch eine solche ebene dehnbare Trägerschicht erhält bei Fertigung und Verwendung der Tapete die Prägeschicht keine Höhenverluste, darüberhinaus bleibt sie voll atmungsaktiv und die Prägungen formstabil, läßt sich ohne Beschädigungen durch die Herstellungsanlage und Konfektionierung transportieren und sehr leicht tapezieren.

Wie bereits erwähnt, ist die dargestellte Ausführung nur eine beispielsweise Verwirklichung der Erfindung. Diese ist nicht darauf beschränkt. So könnte an Stelle der aus Krepp bestehenden Trägerschicht auch ein Vlies verwendet werden oder eine andere sei es glatte bzw. ebene atmungsaktive, insbesondere im Mikrobereich dehnbare Schicht. Die Prägungen sind nur beispielhaft in der Zeichnung eingetragen. Diese können auch eine willkürliche Ausbildung aufweisen. Wichtig ist, daß die Trägerschicht an ihrer Unterseite relativ glatt, also eben ist, um ein leichtes Aufbringen der Tapete an einer Wand zu ermöglichen und daß die Trägerschicht in Mikrobereichen dehnbar bzw. stauchbar und leicht biegbar ist. Wichtig ist auch die Tatsache, daß Klebstoffverbrauch auf Grund der glatten ebenen Trägerschicht wesentlich geringer ist als bei einer durchgeprägten Tapete und somit kostengünstiger hergestellt werden kann. Bei der Tapezierung wird ebenfalls weniger Kleister verwendet, was zu Einsparungen im Kleisterverbrauch führt. Die Prägeschicht selber ist vorteilhafterweise aus einer zweilagigen hierdurch verstärkten Papierschicht aufgebaut. Sie kann aber in einigen Fällen auch aus einer einlagigen Papierschicht bestehen, die ihrerseits durch einzelne Kunststofffäden oder -fasern, die schichtartig zur Papierschicht angeordnet sind, verstärkt werden, hierbei können die Fäden oder die Fasern graglinig oder gekräuselt verlaufen, bzw. parallel zueinander liegen oder sich kreuzen. Die Papierschicht und die schichtartig liegenden Kunststoffäden bzw. -fasern werden einer Heißprägung unterworfen, so daß eine Verschmelzung bzw. Verkleinerungen zwischen den Fäden und dem Papier stattfindet.

### Bezugszeichenliste:

- 10: Prägetapete
- 11: Prägeschicht
- 12: Trägerschicht
- 13: Lage von 11
- 14: Lage von 11
- 15: Prägungen in 11
- 16: Unterseite der Prägeschicht
- 17: hervorstehende Prägeabschnitte an der Unterseite
- 18: Leimstellen
- 19: Vorratsrollen für 11
- 20: Leimstation
- 21: Prägewalze
- 22: Trocknungsstation
- 23: Leimstation
- 24: Verbindungssation
- 25: Vorratsrolle von 12
- 26: Trocknungsstation
- 27: Aufwickelwalze

## Patentansprüche

1. Mehrlagige Prägetapete mit einer Papier-Prägeschicht und mit einer Trägerschicht, die mit der Prägeschicht verklebt ist, hierbei ist die Unterseite der Trägerschicht eben ausgebildet,
**dadurch gekennzeichnet,**
**daß** die Trägerschicht (12) aus einem dehnbaren Material aufgebaut ist, daß die Prägeschicht (11) in an sich bekannter Weise wenigstens aus einem verstärkten Papierwerkstoff (13,14) aufgebaut ist und daß der Klebstoff (18) nur an den an der Unterseite hervorragenden Prägeabschnitten (17) vorgesehen ist, hierbei verbleibt die Trägerschicht zwischen den Klebestellen dehnbar.

2. Papier-Prägetapete nach Anspruch 1, **dadurch gekennzeichnet, daß** die Trägerschicht (12) aus einem dehnbaren Vlieswerkstoff aufgebaut ist.

3. Papier-Prägetapete nach Anspruch 1 oder 2, **dadurch gekennzeichnet, daß** die Tägerschicht (12) aus einem dehnbaren ebenen Papier aufgebaut ist.

4. Papier-Prägetapete nach Anspruch 1 oder 3, **dadurch gekennzeichnet, daß** die Trägerschicht (12) aus Krepp-Papier mit einer relativ glatten Unterseite besteht.

5. Papier-Prägetapete nach einem der Anspruch 3 oder 4, **dadurch gekennzeichnet, daß** das Krepp-Papier naßfest abgeleimt ist.

6. Papier-Prägetapete nach einem der Ansprüche 1 bis 5, **dadurch gekennzeichnet, daß** der Klebstoff zwischen Prägeschicht und Trägerschicht wenigstens schwer wasserlöslich ist.

7. Verfahren zum Herstellen einer mehrlagigen Prägetapete mit einer Prägeschicht und einer Trägerschicht nach einem der Ansprüche 1 bis 6, bei der zunächst in die duplierte Prägeschicht die Prägungen eingebracht werden, dann auf die Unterseite der Prägeschicht der Klebstoff aufgetragen wird und schließlich die glatte Trägerschicht an der die Prägeschicht befestigt wird, **dadurch gekennzeichnet, daß** der Klebstoff (18) nur an den hervorragenden Prägestellen (17) an der Unterseite der zweilagigen Prägeschicht (11) aufgetragen wird und daß eine dehnbare ebene Schicht (12) an den Klebestellen (18) befestigt wird.

8. Verfahren nach Anspruch 7, **dadurch gekennzeichnet, daß** nach dem Einbringen der Prägungen an der mehrlagigen Prägeschicht (11) diese getrocknet wird, dann an ihrer Unterseite (16) mit Klebstoff (18) versehen wird und eine Schicht mit glatter dehnbarer Unterseite aufgebracht und anschließend die fertige Prägetapete endgetrocknet wird.

9. Verfahren nach Anspruch 7 oder 8, **dadurch gekennzeichnet, daß** beim fortlaufenden Zusammenführen von Trägerschicht und Prägeschicht nach dem Klebstoffauftragen in einem Abschnitt eine erhöhte Geschwindigkeit der Antrocknung stattfindet, die die beiden Schichten (11 und 12) soweit aneinander befestigt, daß ohne Delaminierung und/oder Verschiebung der beiden miteinander verbundenen Schichten, bestehend aus Prägeschicht und ebener dehnbarer Trägerschicht ein Weitertransport gegeben ist.

10. Verfahren nach einem der Ansprüche 7 bis 9, **dadurch gekennzeichnet, daß** die erhöhte Geschwindigkeit der Antrocknung durch Bestrahlen, insbesondere Wärmebestrahlen erfolgt.

11. Verfahren nach einem der Ansprüche 7 bis 10, **dadurch gekennzeichnet, daß** die erhöhte Geschwindigkeit der Antrocknung durch thermische Übertragung, insbesondere Wärmeübertragung mechanisch erfolgt.

12. Verfahren nach einem der Ansprüche 7 bis 11, **dadurch gekennzeichnet, daß** wenigstens in der Phase der erhöhten Geschwindigkeit der Antrocknung bei der Bewegung der beiden Schichten die Prägeschicht mit ihren Klebestellen leicht mit Druck auf die Trägerschicht hin belastet ist.

13. Vorrichtung, zur Durchführung des Verfahrens nach Anspruch 7 bis 12, mit zumindest einer Vorratsrolle (19), auf der ein Papierwerkstoff bevorratet ist und eine Prägestation (21) in der der Papierwerkstoff prägbar ist, sowie eine Trockenstation (22) und einer anschließenden Leimstation (23), in der Klebstoff auf die an der Unterseite hervorragenden Prägeabschnitte (17) der Prägeschicht auftragbar ist, und nach der Leimstation (23) eine Verbindungsstation (24) zum Befestigen der Prägeschicht mit der Trägerschicht verwendbar ist, **dadurch gekennzeichnet, daß** die Verbindungsstation (24) beheizbar ist und aus einer Trommel oder einer ebenen Zone besteht, zur Erreichung einer relativbeweglosen Führung von Prägeschicht (11) und Trägerschicht (12), solange bis eine ausreichende stabilisierte Verklebung erzielt ist.

14. Vorrichtung zur Durchführung des Verfahrens nach Anspruch 13, **dadurch gekennzeichnet, daß** die Verbindungsstation als Umlenktrommel ausgebildet ist und durch die Lagerung der Umlenktrommel, auf der die Trägerschicht liegt, die Prägeschicht in ihrer Bewegungsrichtung unter Spannung steht und sich mit ihren Klebestellen auf der Trägerschicht abstützt.

15. Vorrichtung zur Durchführung des Verfahrens nach Anspruch 13 oder Anspruch 14, **dadurch gekennzeichnet, daß** eine Erwärmung der beheizbaren Umlenktrommel (24) und/oder der beheizbaren Laminiereinrichtung bei einer Verwendung von wasserhaltigem Klebstoff bis zu 220 Grad Celsius erfolgt.

## Claims

1. Multi-ply embossed wallcovering with an embossed paper layer and a substrate layer bonded to the embossed layer, where the underside of the substrate layer is flat,
**characterised in that**
the substrate layer (12) is made of an extensible material, that the embossed layer (11) is made of at least one reinforced paper material (13, 14) in the known manner, and that the adhesive (18) is only applied on embossed sections (17) projecting on the underside, where the substrate layer remains extensible between the points of adhesion.

2. Embossed paper wallcovering as per Claim 1, **characterised in that** the substrate layer (12) is made of an extensible nonwoven fabric material.

3. Embossed paper wallcovering as per Claim 1 or 2, **characterised in that** the substrate layer (12) is made of a flat, extensible paper.

4. Embossed paper wallcovering as per Claim 1 or 3, **characterised in that** the substrate layer (12) is made of crêpe paper with a relatively smooth underside.

5. Embossed paper wallcovering as per Claim 3 or 4, **characterised in that** the crêpe paper is treated with wet-strength size.

6. Embossed paper wallcovering as per one of Claims 1 to 5, **characterised in that** the adhesive between the embossed layer and the substrate layer is at least only slightly soluble in water.

7. Method for manufacturing a multi-ply embossed wallcovering with an embossed layer and a substrate layer as per one of Claims 1 to 6, in which the duplexed embossed layer is first embossed, the adhesive is then applied to the underside of the embossed layer and the smooth substrate layer is finally fixed to the embossed layer, **characterised in that** the adhesive (18) is only applied to embossed sections (17) projecting on the underside of the two-ply embossed layer (11), and that an extensible, flat layer (12) is fixed to the points of adhesion (18.)

8. Method as per Claim 7, **characterised in that**, after first being embossed, the multi-ply embossed layer (11) is dried, the adhesive (18) is applied to its underside (16), a layer with a smooth, extensible underside is fixed to it and, finally, the finished embossed wallcovering is dried for the last time.

9. Method as per Claim 7 or 8, **characterised in that**, during the continuous joining of the substrate layer and the embossed layer after application of the adhesive, preliminary drying occurs at a faster rate in one section, this fixing the two layers (11 and 12) together sufficiently for further transport to be possible without delamination and/or relative shifting of the two bonded layers, comprising the embossed layer and the flat, extensible substrate layer.

10. Method as per one of Claims 7 to 9, **characterised in that** the increased rate of preliminary drying is achieved by means of radiation, particularly thermal radiation.

11. Method as per one of Claims 7 to 10, **characterised in that** the increased rate of preliminary drying is achieved mechanically by means of thermal transfer, particularly heat transfer.

12. Method as per one of Claims 7 to 11, **characterised in that**, at least during the phase of the increased rate of preliminary drying, the points of adhesion of the embossed layer are pressed lightly onto the substrate layer when the two layers are in motion.

13. Device for implementing the method as per Claims 7 to 12, with at least one supply roll (19), on which a paper material is loaded, an embossing station (21), in which the paper material can be embossed, a drying station (22) and a subsequent gluing station (23), in which adhesive can be applied to the embossed sections (17) projecting on the underside of the embossed layer, the gluing station (23) being followed by a joining station (24) for joining the embossed layer and the substrate layer, **characterised in that** the joining station (24) can be heated and consists of a drum or a flat zone in order to achieve guidance of the embossed layer (11) and the substrate layer (12) without relative motion until a sufficiently stabilised adhesive bond has been achieved.

14. Device for implementing the method as per Claim 13, **characterised in that** the joining station is designed as a guide drum and that, due to the bearing arrangement of the guide drum on which the substrate layer lies, the embossed layer is under tension in its direction of motion and its points of adhesion come to rest on the substrate layer.

15. Device for implementing the method as per Claim 13 or 14, **characterised in that** the heatable guide drum (24) and/or the heatable laminating device is heated to up to 220 °C when using an adhesive containing water.

## Revendications

1. Papier peint multicouches, comportant une couche de papier gaufrée et une couche porteuse collée à la couche gaufrée, la face inférieure de la couche porteuse étant réalisée plane,
**caractérisé en ce que**
la couche porteuse (12) est constituée en un matériau extensible, **en ce que** la couche gaufrée (11) est constituée de manière connue en soi en au moins un matériau en papier renforcé (13, 14), et **en ce que** la colle (18) n'est prévue que sur les tronçons gaufrés (17) dépassant sur la face inférieure, la couche porteuse restant extensible entre les deux emplacements collés.

2. Papier peint gaufré selon la revendication 1, **caractérisé en ce que** la couche porteuse (12) est constituée en un matériau en nappe extensible.

3. Papier peint gaufré selon l'une ou l'autre des revendications 1 et 2, **caractérisé en ce que** la couche porteuse (12) est constituée en un papier plan extensible.

4. Papier peint gaufré selon l'une ou l'autre des revendications 1 et 3, **caractérisé en ce que** la couche porteuse (12) est constituée en papier-crêpe avec une face inférieure relativement lisse.

5. Papier peint gaufré selon l'une ou l'autre des revendications 3 et 4, **caractérisé en ce que** le papier-crêpe est encollé, résistant à l'état humide.

6. Papier peint gaufré selon l'une des revendications 1 à 5, **caractérisé en ce que** la colle entre la couche gaufrée et la couche porteuse est au moins difficilement soluble à l'eau.

7. Procédé pour produire un papier peint multicouche, comportant une couche de papier gaufrée et une couche porteuse, selon l'une des revendications 1 à 6, dans lequel on applique des gaufrages tout d'abord dans la couche gaufrée doublée, ensuite on dépose la colle sur la face inférieure de la couche gaufrée, et finalement on fixe la couche porteuse lisse sur la couche gaufrée, **caractérisé en ce que** l'on dépose la colle (18) seulement sur les emplacements gaufrés (17) dépassant sur la face inférieure de la couche gaufrée (11) à deux couches, et **en ce que** l'on fixe une couche plane extensible (12) aux emplacements collés (18).

8. Procédé selon la revendication 7, **caractérisé en ce qu'**après avoir appliqué les gaufrages sur la couche gaufrée multicouche (11), on la fait sécher, ensuite on la pourvoit de colle (18) sur sa face inférieure (16) et on dépose une couche à face inférieure lisse extensible, et ensuite on fait sécher à finition le papier peint gaufré fini.

9. Procédé selon l'une ou l'autre des revendications 7 et 8, **caractérisé en ce que** pendant l'assemblage continu de la couche porteuse et de la couche gaufrée, après déposition de la colle, on procède dans un tronçon à un séchage inital à vitesse accrue qui fait fixer les deux couches (11 et 12) l'une sur l'autre de telle sorte que sans décollement interlaminaire et/ou déplacement des deux couches reliées l'une à l'autre, constituées par la couche gaufrée et par la couche porteuse extensible plane, une poursuite du transport est assurée.

10. Procédé selon l'une des revendications 7 à 9, **caractérisé en ce que** la vitesse accrue du séchage initial est assurée par rayonnement, en particulier par rayonnement thermique.

11. Procédé selon l'une des revendications 7 à 10, **caractérisé en ce que** la vitesse accrue du séchage initial est assurée par transmission thermique, en particulier par transmission thermique mécanique.

12. Procédé selon l'une des revendications 7 à 11, **caractérisé en ce qu'**au moins pendant la phase de la vitesse accrue du séchage initial, lors du déplacement des deux couches, la couche gaufrée comportant ses emplacements collés est légèrement mise sous pression en direction de la couche porteuse.

13. Dispositif pour mettre en oeuvre le procédé selon l'une des revendications 7 à 12, comportant au moins un rouleau de réserve (19) sur lequel est stocké un matériau en papier, une station de gaufrage (21) dans laquelle le matériau papier peut être gaufré, ainsi qu'une station de séchage (22) et à la suite une station d'encollage (23) dans laquelle de la colle peut être déposée sur les tronçons gaufrés (17) de la couche gaufrée qui dépassent sur la face inférieure, et après la station d'encollage (23) une station de liaison (24) utilisable pour fixer la couche gaufrée sur la couche porteuse, **caractérisé en ce que** la station de liaison (24) peut être chauffée et est constituée par un tambour ou par une zone plane, afin d'obtenir un guidage sans déplacement relatif de la couche gaufrée (11) et de la couche porteuse (12), jusqu'à atteindre un collage suffisamment solide.

14. Dispositif pour mettre en oeuvre le procédé selon la revendication 13, **caractérisé en ce que** la station de liaison est réalisée sous forme de tambour de renvoi, et **en ce que**, du fait du passage sur le tambour de renvoi sur lequel repose la couche porteuse, la couche gaufrée est mise sous tension dans sa direction de déplacement, et s'appuie par ses emplacements collés sur la couche porteuse.

15. Dispositif pour mettre en oeuvre le procédé selon l'une ou l'autre des revendications 13 et 14, **caractérisé en ce que** le chauffage du tambour de renvoi susceptible d'être chauffé (24) et/ou du dispositif de laminage susceptible d'être chauffé s'effectue jusqu'à 220°C en utilisant une colle aqueuse.
